# EUROPEAN PATENT APPLICATION

(11) **EP 4 431 243 A1**
(43) Date of publication of application: **18.09.2024**
(21) Application number: 23162544.3
(22) Date of filing: 17.03.2023
(51) Int. Cl.: B25F 5/02, A01D 34/90

(54) **POWER TOOL**

(71) Applicant: MTD Products Inc, Valley City, OH 44280-2711 (US)
(72) Inventor: SAUER, Stefan, 66773 Schwalbach (DE); ANDORF, Markus, 57550 Falck (FR)
(74) Representative: SBD IPAdmin

(57) **Abstract**

A power tool comprises an elongate housing comprising a battery. The elongate housing has a first end and a second end. The first end has a first electrical interface for removably receiving a first tool accessory comprising a first electrical component capable of being powered by the battery. The second end has a second electrical interface for removably receiving a second tool accessory comprising a second electrical component capable of being powered by the battery.

## Description

### Field

The present disclosure relates to a power tool.

### Background

Multipurpose power tools can have interchangeable tool accessories to make them more versatile. A battery powered power tool with interchangeable tool accessories is shown in DE202021106697 and DE202021106696. The interchangeable tool accessories can be tool accessories comprising a motor or can be unpowered tool accessories.

This means that a tool accessory comprising a motor increases the weight of the power tool and can make the power tool when connected to the power tool accessory difficult to grip in certain orientations of the power tool. This limits the size and power of the tool accessory that can be combined with the power tool.

Furthermore, the battery pack is housed within the power tool at the handle end of the power tool. The handle is fixed to the power tool housing and electrical integrated with the battery pack which means that the battery is difficult to access if the battery needs replacing or maintenance.

### Summary

Examples of the present disclosure aim to address the aforementioned problems.

According to an aspect of the present disclosure there is a power tool comprising: an elongate housing comprising a battery, the elongate housing having a first end and a second end, wherein: the first end has a first electrical interface for removably receiving a first tool accessory comprising a first electrical component capable of being powered by the battery; and the second end has a second electrical interface for removably receiving a second tool accessory comprising a second electrical component capable of being powered by the battery.

Optionally, the first electrical interface and the second electrical interface are different.

Optionally, the first end is arranged to removably attach directly to a handle or indirectly to the handle via the first tool accessory.

Optionally, the battery comprises one or more battery cells aligned along the longitudinal axis of the elongate housing.

Optionally, the second electrical interface is aligned with the longitudinal axis of the elongate housing.

Optionally, the first electrical interface is offset from the longitudinal axis of the elongate housing.

Optionally, the first end comprises a first mechanical interface and the second end comprises a second mechanical interface.

Optionally, the first mechanical interface is different from the second mechanical interface.

Optionally, the first mechanical interface and the second mechanical interface respectively comprise a release mechanism for selectively releasing the first tool accessory and the second tool accessory.

Optionally, the release mechanism of the first and second mechanical interface each comprises a depressible button for respectively engaging a recess in the first tool accessory and the second tool accessory.

Optionally, the second mechanical interface comprises one or more longitudinal rails for engaging with reciprocal slots in the first tool accessory.

Optionally, the first mechanical interface comprises a projecting body portion from the elongate housing for engaging with a reciprocal recess in the second tool accessory.

Optionally, the first and second electrical components are one or more of a motor, a light, a compressor, a pump, a turbine, or a flow measurement device

Optionally, the power tool comprises a tank, a pressurized container or a non-pressurized container.

Optionally, the first tool accessory and the second tool accessory are not attachable at the same time.

Optionally, the first tool accessory and the second tool accessory are one or more of: a string trimmer attachment, a hedge trimmer attachment, a power shears attachment, a power washer compressor pump attachment, a flashlight, a blowervac attachment, a chainsaw attachment, a rotavator attachment, a grass shear attachment, a tree lopper attachment, a pole saw attachment, a cultivator attachment, a trencher attachment, an edger attachment, a brush attachment, a joint brush attachment, or a dethatching attachment.

In another aspect there is provided a power tool system comprising:a power tool according to the previous aspect; and a first tool accessory; and a second tool accessory; wherein the first tool accessory is heavier than the second tool accessory.

Optionally, the power tool system comprises a handle for connecting to the first tool accessory or connecting to the elongate housing.

Optionally, the power tool system comprises a first configuration wherein the centre of gravity of the power tool is at a first location when the first tool accessory is connected to the first end of the elongate housing and a second configuration wherein the centre of gravity of the power tool is at a second location when the second tool accessory is connected to the second end of the elongate body and the centre of gravity is closer to the first end in the first configuration than in the second configuration.

In another aspect there is provided a power tool comprising: a battery housing comprising one or more battery cells inside of the battery housing and the battery housing comprises one or more optical indicators configured to indicate a status of the one or more battery cells or the power tool; a handle removably attachable to the battery housing and having a handle housing arranged to overlap a portion of the battery housing when attached to the battery housing;wherein the handle housing comprises one or more housing apertures configured to receive light therethrough from the one or more optical indicators when the handle is attached to the battery housing.

Optionally, a light guide protrudes into the one or more housing apertures and the light guide is configured to guide light from the one or more optical indicators to an external surface of the handle housing.

Optionally, the light guide is mounted on the handle housing.

Optionally, the light guide comprises a plurality of different sub-light guides each providing a light path for a different optical indicator.

Optionally, the plurality of sub-light guides are connected by one or more transverse bridge portions.

Optionally, the light guide comprises a first light receiving surface and a first light emitting surface and the first light receiving surface and the first light emitting surface are parallel to a first plane.

Optionally, the light guide comprises a second light receiving surface and a second light emitting surface and the second light receiving surface and the second light emitting surface are parallel to a second plane wherein the second place is at an angle to the first plane.

Optionally, the light guide is flush with the external surface of the handle housing.

Optionally, the at least one housing aperture, the light guide and the one or more optical indicators are aligned along a first axis when the handle is attached to the battery housing.

Optionally, the first axis is perpendicular to a longitudinal axis of the battery housing.

Optionally, the one or more optical indicators are mounted inside the battery housing and the battery housing comprises one or more battery apertures for receiving light emitted from the one or more optical indicators.

Optionally, the one or more battery apertures are aligned with the one or more housing apertures when the handle is attached to the battery housing.

Optionally, the status of the battery is one or more of battery charge status, battery fault status, run time status, power draw status, battery cell replacement status, device error status, device operation status, battery charging in progress status, battery fully charged status, charging time status, wear status of device / attached tool.

Optionally, the optical indicators are one or more of an LED, an incandescent bulb, an OLED, a fluorescent lamp, or a laser.

In another aspect there is provided a power tool system comprising: an elongate housing comprising a battery and having a first end and a second end, the second end configured to receive a tool accessory; a first handle which is removably attachable to the first end of the elongate housing and having a first switch for activating and deactivating the power tool, the first handle having a first handle gripping orientation; and a second handle which is removably attachable to the first end of the elongate housing and having a second switch for activating and deactivating the power tool, the second handle having a second handle gripping orientation that is different to the first handle gripping orientation.

Optionally, the first handle extends along a first longitudinal handle axis parallel to a longitudinal axis of the elongate housing.

Optionally, the first handle comprises a pistol grip.

Optionally, the second handle extends along a second longitudinal handle axis perpendicular to a longitudinal axis of the elongate housing.

Optionally, the second handle comprises a gripping portion for two hands side by side.

Optionally, the elongate housing comprises a first end electrical interface in electrical connection with the battery.

Optionally, the first handle comprises a first handle electrical interface configured to electrically connect to the first end electrical interface and form a circuit with the battery and the first switch.

Optionally, the second handle comprises a second handle electrical interface configured to electrically connect to the first end electrical interface and form a circuit with the battery and the second switch.

Optionally, the battery is removable from the elongate housing.

Optionally, the battery is removable from the elongate housing when the first handle and the second handle are detached from the elongate housing.

Optionally, the power tool system comprises a third handle which is removably attachable to the first end of the elongate housing and having a third switch for activating and deactivating the power tool, the third handle having a third handle gripping orientation that is different to the first handle gripping orientation and the second handle gripping orientation.

Optionally, the third handle comprises a ball grip.

Optionally, the first switch and the second switch comprise buttons which are respectively depressible into the first handle when the user grips the first handle in the first handle gripping orientation and the user grips the second handle in the second handle gripping orientation.

Optionally, the second switch comprises a pivotable bar configured to actuate when the pivotable bar is squeezed against the second handle when the user grips the second handle in the second handle gripping orientation.

Optionally, the first switch is actuatable when the user grips the first handle in the first handle gripping orientation and the second switch is actuatable when the user grips the second handle in the second handle gripping orientation.

### Brief Description of the Drawings

Various other aspects and further examples are also described in the following detailed description and in the attached claims with reference to the accompanying drawings, in which:
Figure 1 shows a perspective view of a power tool according to an example;
Figure 2 shows a cross-sectional view of a power tool according to an example;
Figures 3 to 5 show a close-up cross-sectional views of a handle of a power tool according to an example;
Figures 6a to 6d show perspective views of different handles for a power tool according to an example;
Figure 7 shows a perspective view of a light guide for a handle of a power tool according to an example;
Figures 8 and 9 show cross-sectional views of a battery housing portion of a power tool according to an example;
Figures 10 and 11 show close-up perspective views of the ends of an elongate housing of a power tool according to an example;
Figures 12 to 15 show various perspective views of the power tool with either a first tool accessory or a second tool accessory.

### Detailed Description

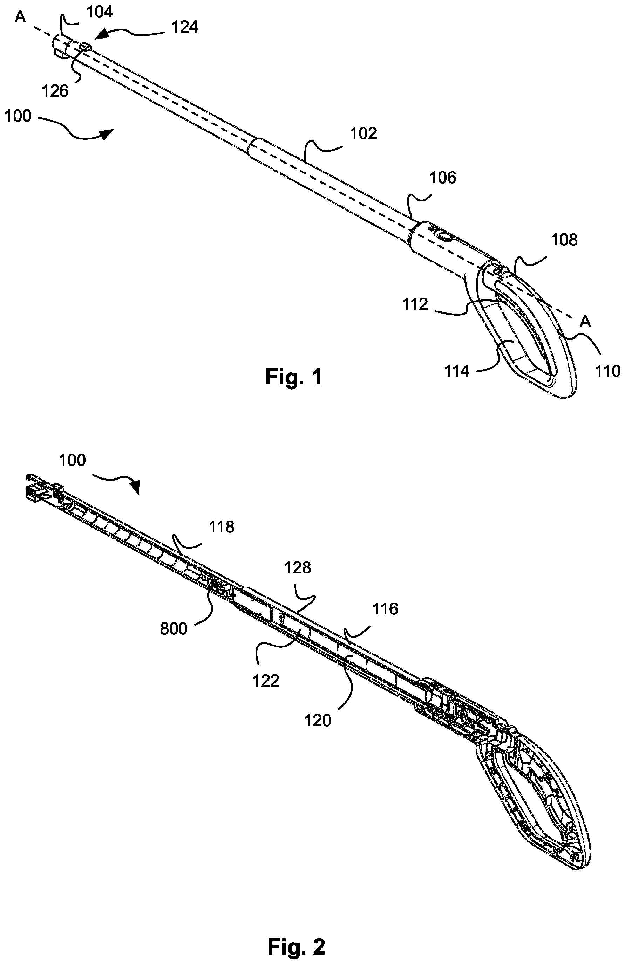

Figure 1 shows a perspective view of a power tool 100. The power tool 100 comprises an elongate housing 102 extending along a longitudinal axis A-A. The power tool 100 comprises a first end 104 and a second end 106.

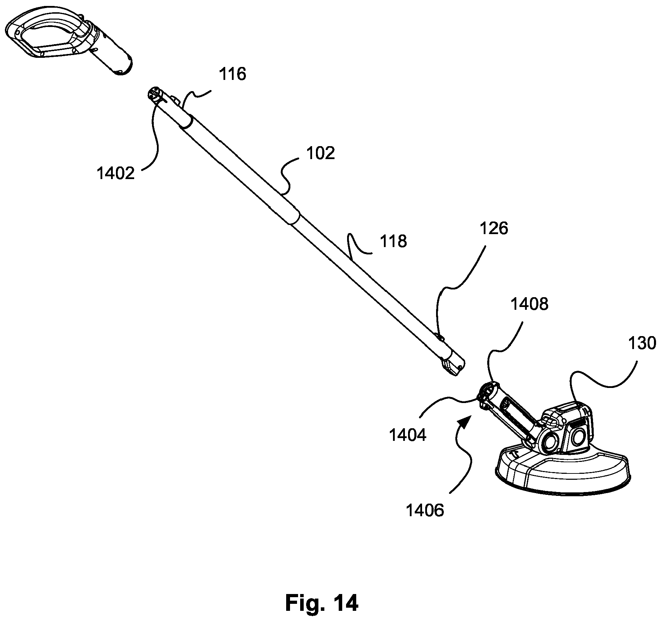

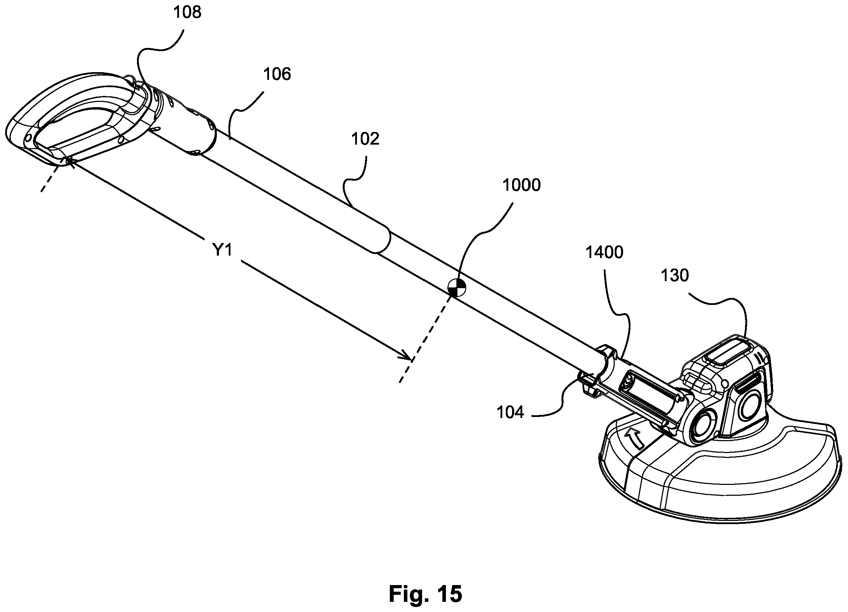

The first end 104 of the elongate housing 102 is configured to receive a first tool accessory 130 (best shown in Figures 14 and 15). The first tool accessory 130 is removably attachable to the elongate housing 102 at the first end 104. The first tool accessory 130 comprises a motor (not shown) configured to be electrically connected to the power tool 100 when connected to the elongate housing 102. The first tool accessory 130 as shown in Figure 14 is optionally a string trimmer attachment.

The first tool accessory 130 comprises a first electrical component such as a motor (not shown) configured to be electrically connected to the power tool 100. In the example where the first tool accessory 130 is a string trimmer attachment, the motor is configured to power a cutting line. In other examples, the first tool accessory 130 can be any suitable tool accessory and the first tool accessory 130 will be discussed in more detail below. In other examples, the first electrical component can be any suitable electrical component configured to be connected to power tool 100.

The second end 106 of the elongate housing 102 is configured to receive a first handle 108. The first handle 108 is removably attachable to the elongate housing 102 at the second end 106. The first handle 108 comprises a first handle gripping orientation in which the user can grip the first handle 108.

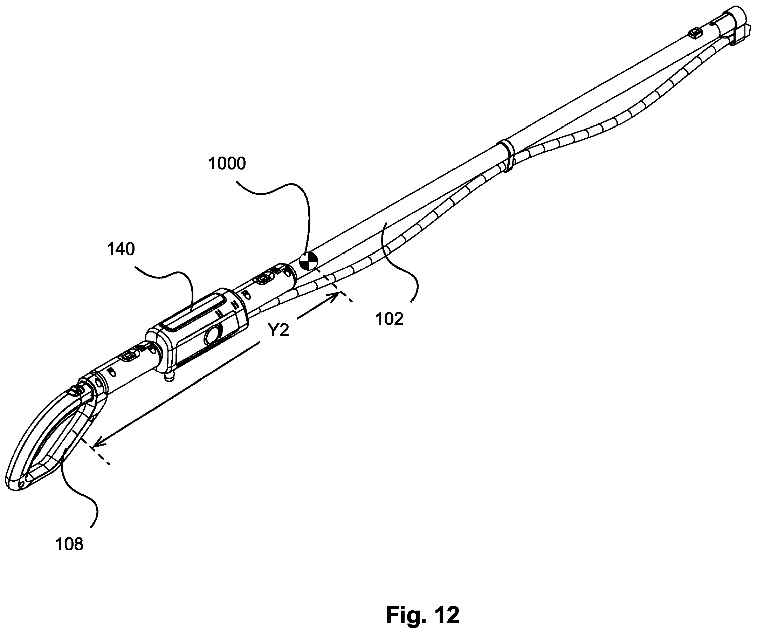

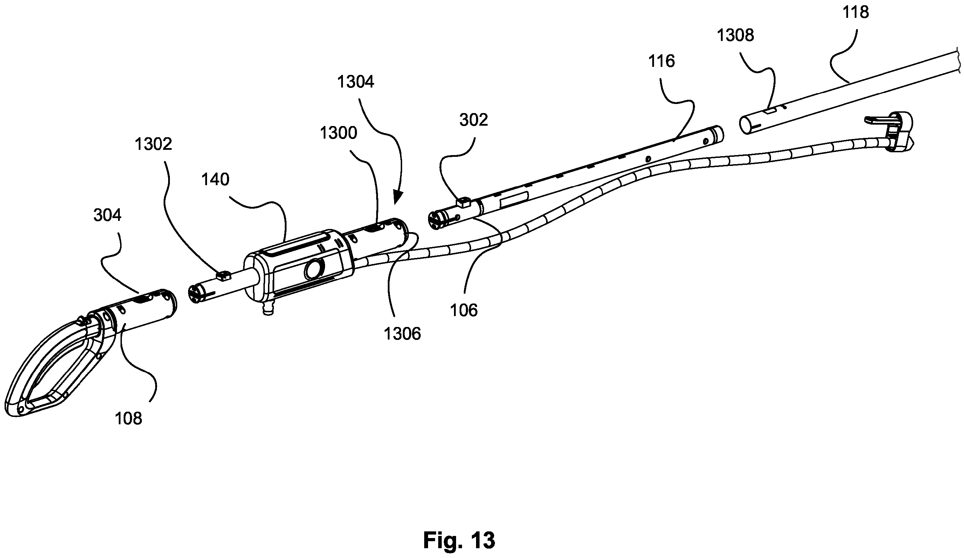

As shown in Figure 1, the first handle 108 comprises a pistol grip configuration with a first handle gripping portion 110, a first trigger switch 112 and a finger guard portion 114. The first handle 108 comprises a clam-shell construction fastened together with suitable fasteners such as screws. The first trigger switch 112 of the first handle 108 is configured to be electrically connected to the elongate housing 102 and selectively control the power tool 100 and the first tool accessory 130 (as shown in Figures 14 and 15) or a second tool accessory 140 (as shown in Figures 12 and 13).

In some examples, the second tool accessory 140 is a pump unit for a power washer attachment. The second tool accessory 140 comprises a second electrical component e.g. a motor (not shown) configured to be electrically connected to the power tool 100. In the example where the second tool accessory 140 is a pump attachment for a pressure washer, the motor is configured to power a pump for the pressure washer. In other examples, the second tool accessory 140 can be any suitable tool accessory and the second tool accessory 140 will be discussed in more detail below. In other examples, the second electrical component can be any suitable electrical component configured to be connected to power tool 100.

The elongate housing 102 is hollow and cylindrical and housing components of the power tool 100 therein. In some examples, the elongate housing 102 comprises one or more hollow metal tubes made from a suitable material such as aluminium. In other examples, the elongate housing 102 can be made from material such as a plastic material e.g. acrylonitrile butadiene styrene (ABS) or another suitable plastic material. This will be discussed in more detail with respect to Figure 2. Figure 2 shows a cross-sectional perspective view of the power tool 100.

In some examples, the elongate housing 102 is an elongate tube 118 and a battery housing portion 116 is received within the elongate tube 118. The elongate tube 118 is coupled to the battery housing portion 116.

The battery housing portion 116 is configured to house a battery pack 120 comprising a plurality of battery cells 122. The plurality of battery cells 122 are aligned along the longitudinal axis A-A within the battery housing portion 116. In some examples, the plurality of battery cells 122 are electrically coupled together in parallel. In other examples, the plurality of battery cells 122 are electrically coupled together in series. The battery pack 120 is configured to be electrically connected to the first tool accessory 130 or the second tool accessory 140 and the first trigger switch 112 on the first handle 108. In this way, the battery pack 120, the first trigger switch 112 and a motor in the first or second tool accessory 130, 140 are configured to create an electrical circuit. An electrical circuit in a power tool 100 is known and will not be discussed any further.

The battery housing portion 116 as shown in e.g. Figures 12 to 15 is mounted in the elongate housing 102 closer to the second end 106 than the first end 104 of the elongate housing 102. When the first handle 108 is connected to the second end 106 this means that the battery housing portion 116 is closer to the first handle 108. Accordingly, the weight of the battery pack 120 is closer to the first handle gripping portion 110 and there is less turning moment of the battery pack 120 about the first handle 108 when the user grips the first handle 108 in use.

This means that the power tool 100 is easier to use than if the battery cells 122 extend down the battery housing portion 116 and the elongate tube 118. However, in a less preferred example, the battery cells 122 can extend down through the battery housing portion 116 and the elongate tube 118. This might be desirable for an extended runtime even if the ergonomics of the heavier power tool 100 is harder for the user to handle during operation.

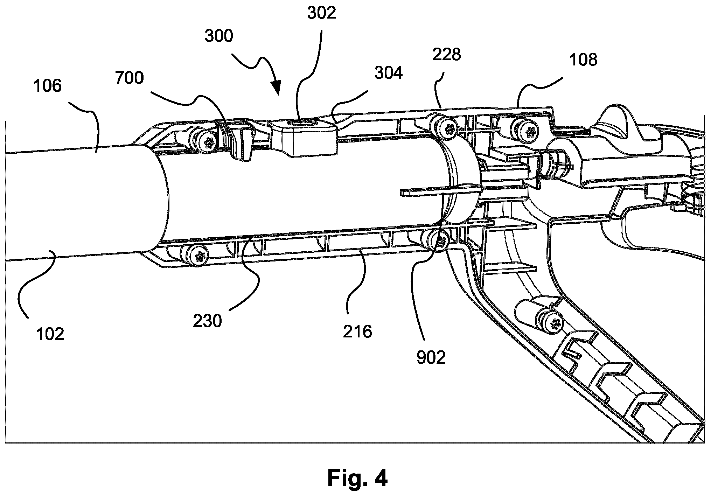

In some examples, the battery housing portion 116 is fixed with respect to the elongate tube 118 via a second end locking mechanism 300. The second end locking mechanism 300 is described in more detail below with respect to Figure 4. In some alternative examples, the battery housing portion 116 is fixed to the elongate tube 118 via fastenings or an adhesive. In other examples, the battery housing portion 116 is held in position within the elongate tube 118 with a friction fit between the elongate tube 118 and the battery housing portion 116.

As mentioned above, the battery housing portion 116 is fully inserted within the elongate tube 118. However, in other examples the battery housing portion 116 may only be partially inserted into the elongate tube 118.

In some examples, the elongate tube 118 is removably attachable to the battery housing portion 116. The second end locking mechanism 300 allows the elongate tube 118 to be removably attachable to the battery housing portion 116. This means that the battery housing portion 116 can be replaceable. Accordingly, the user can replace the battery housing portion 116 and the battery pack 120 if there is a fault with the battery pack 120.

Furthermore, by removably attaching the battery housing portion 116 to the elongate tube 118, the length of the elongate housing 102 can be adjusted by removing the elongate tube 118 or replacing the elongate tube 118 with a different length elongate tube 118. In some configurations of the power tool 100 the elongate tube 118 may be omitted which reduces the length of the power tool 100 along the longitudinal axis A-A. In this example, the first or second tool accessory 130, 140 and the first handle 108 are connected directly to the battery housing portion 116.

The elongate tube 118 can comprise a soft gripping material 128 to provide another location for the user to grip the power tool 100. As shown in Figure 2, the soft gripping material 128 is applied to around the elongate tube 118 comprising the battery housing portion 116. The soft gripping material 128 is a rubber or silicone material overmolded or pulled onto on the elongate housing 102.

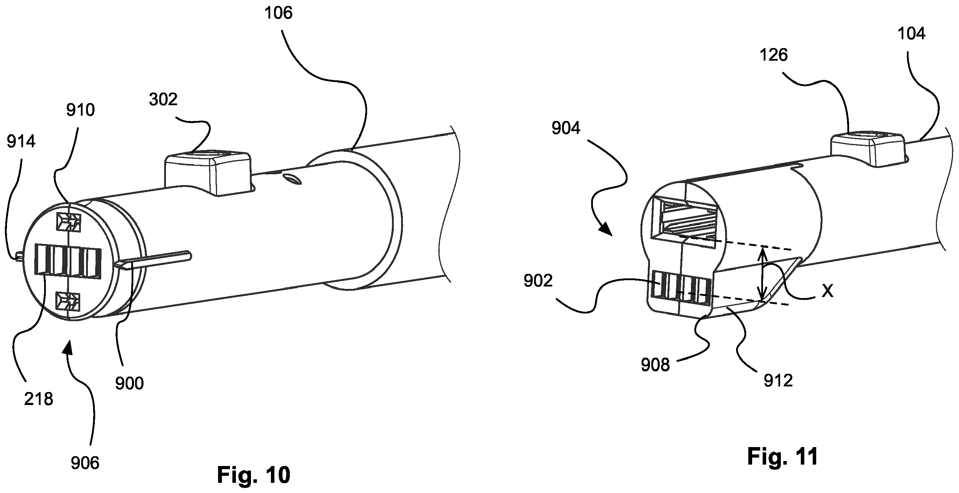

In some examples, the elongate tube 118 comprises first and second aligning tube slots 1402 (best shown in Figure 13) configured to receive a first and second aligning rails 900, 914 on the second end 106 of the battery housing portion 116. The first and second aligning tube slots 1402 receive a first and second aligning rails 900, 914 (best shown in Figure 10) and ensure that the battery housing portion 116 is correctly aligned with respect to the elongate tube 118.

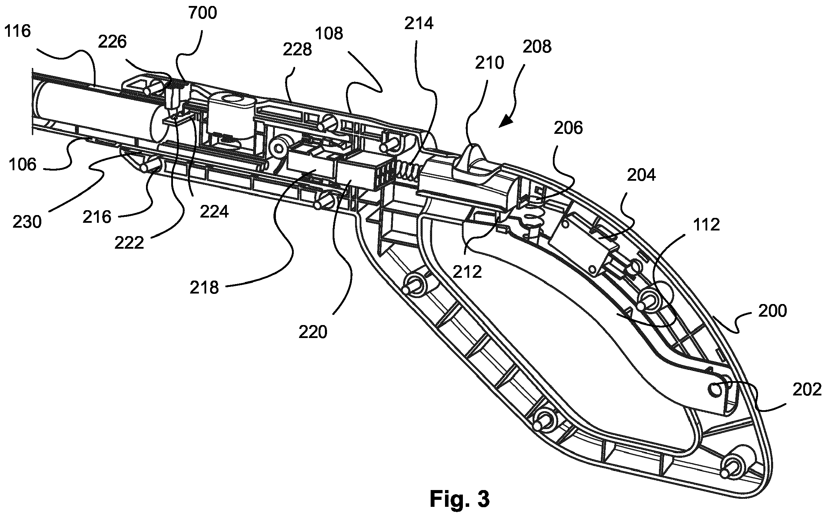

Figures 3, 4 and 5 show various side views of the first handle 108. The first handle 108 will be discussed in more detail. As mentioned above, the first handle 108 is removably attachable to the elongate housing 102. As shown in Figure 3, the first handle 108 is connected to the battery housing portion 116. As mentioned above, the first handle 108 is a pistol grip type handle. In order for the user to use the power tool 100 in different orientations and different tool accessories 130, 140, further handles can also be removably attached to the power tool 100.

In this way, the power tool 100, one or more tool accessories 130, 140 and a plurality of different handles 108, 320, 322, 324, each with a different handle gripping orientation can be combined to provide a power tool system. The power tool system is versatile and allows the user to perform different tasks with different tool accessories 130, 140 which require different gripping orientations. This can be desirable when the user wishes to save storage space and does not need a specific power tool for different tasks.

Figure 3 shows one half of the claim shell handle housing 200 removed. The first handle 108 comprises a first trigger switch 112 is pivotally mounted to the first handle 108 at pivot point 202. When the user squeezes the first trigger switch 112 into the first handle 108, the first trigger switch 112 is configured to actuate a microswitch 204. The microswitch 204 is connected to the electrical circuit of the power tool 100 and configured to selectively actuate the power tool 100. The first trigger switch 112 is sprung biased by trigger spring 206 out of the first handle 108. As the user releases the first trigger switch 112, the trigger spring 206 urges the first trigger switch 112 back to a released position as shown in Figure 3.

The first handle 108 optionally comprises a safety lock mechanism 208 which is configured to prevent the user from accidentally actuating the first trigger switch 112. The safety lock mechanism 208 comprises a slidable lock button 210 which is configured to slide between a locked position and a release position. The slidable lock button 210 comprises a locking rib 212. The locking rib 212 prevents the first trigger switch 112 from moving into the first handle 108 when the slidable lock button 210 is in the locked position. The slidable lock button 210 is spring biased into the locked position by locking mechanism spring 214. As shown in Figure 3, the safety lock mechanism 208 is in the locked position and the first trigger switch 112 cannot be depressed.

When the user wishes to actuate the first trigger switch 112, the user pushes the slidable locking button 210 towards the locking mechanism spring 214 into the release position. This moves the locking rib 212 away from the path of the first trigger switch 112 and the first trigger switch 112 can be depressed into the first handle 108. When the user releases the first trigger switch 112, the slidable locking button 210 is urged into the locked position again.

The first handle 108 comprises a handle housing sleeve 216 for receiving the battery housing portion 116 therein. The handle housing sleeve 216 comprises a cylindrical recess for receiving the second end 106 of the elongate housing 102. Figure 3 shows the handle housing sleeve 216 engaged with the second end 106 of the elongate housing 102. In this way, the handle housing sleeve 216 overlaps a portion of the elongate housing 102 when the first handle 108 is connected to the elongate housing 102.

Turning to Figures 10 and 11 the interfaces of the elongate housing 102 will be discussed in more detail. Figures 10 and 11 show close-up perspective views of the first and second ends 104, 106 of the elongate housing 102 of the power tool 100. The elongate housing 102 comprises a first electrical interface 904 at the first end 104 of the elongate housing 102. The first electrical interface 904 is configured to electrically connect with a reciprocal first tool electrical interface 1406. The elongate housing 102 also comprises a second electrical interface 906 at a second end 106 of the elongate housing 102. The second electrical interface 906 is configured to electrically connect with a reciprocal handle electrical interface 400 or a reciprocal second tool electrical interface 1304.

The elongate housing 102 comprises a first mechanical interface 908 at the first end 104 of the elongate housing 102. The first mechanical interface 908 is configured to mechanically connect with a reciprocal first tool mechanical interface 1408. The elongate housing 102 also comprises a second mechanical interface 910 at a second end 106 of the elongate housing 102. The second mechanical interface 910 is configured to mechanically connect with a reciprocal handle mechanical interface 402 or a reciprocal second tool mechanical interface 1306.

The second electrical interface 906 allows the battery housing portion 116 to be electrically connected to the first handle 108. The second electrical interface 906 comprises a second end electrical connector 218. The second end electrical connector 218 electrically couples with a first handle electrical connector 220. The second end electrical connector 218 is shown in Figure 10. The second electrical interface 906 will be discussed in more detail below with respect to Figure 10. The first handle electrical connector 220 is in electrical connection with the microswitch 204. The electrical connections e.g. wires have not been shown in the Figures for the purposes of clarity.

The overlap of the handle housing sleeve 216 with the second end 106 of the elongate housing 102 ensures a robust mechanical connection between the elongate housing 102 and the first handle 108. This means that the elongate housing 102 does not move with respect to the first handle 108 when connected thereto. This protects the second end electrical connector 218.

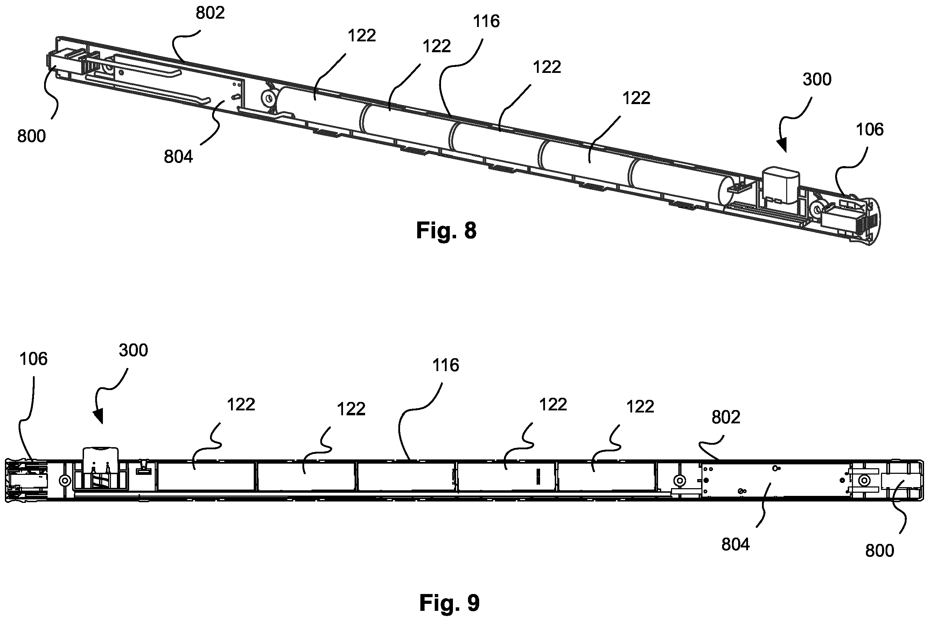

The battery housing portion 116 comprises a controller 804 (best shown in Figure 8) which is configured to control the functionality of the battery pack 120. Furthermore, the controller 804 can optionally control the functionality of the power tool 100. The controller 804 for the power tool 100 is known and will not be discussed herein in any further detail.

The battery housing portion 116 comprises one or more optical indicators 222 configured to indicate a condition or status of the battery pack 120 to the user. In some examples the one or more optical indicators 222 are plurality of LEDs 222 mounted on a PCB 224. The LEDs 222 are electrically connected to the controller 804 and the controller 804 is configured to issue a control signal to the LEDs 222 based on a status of the battery pack 120. In some examples the controller 804 is configured to illuminate the LEDs 222 in dependence of a battery charge status of the battery pack 120.

In other examples, the controller 804 is configured to illuminate the LEDs 222 in dependence of one or more other battery status information. In some examples the status of the battery pack 120 is additionally or alternatively one or more of battery fault status, run time status, power draw status, or battery cell 122 replacement status. In some other examples, the one or more optical indicators 222 are configured to indicate status information of the power tool 100 or a subsystem of the power tool 100. For example, the one or more optical indicators 222 are configured to indicate a fault status of the power tool 100, an operational status of the power tool 100 or any other status information of the power tool 100.

In some other examples, the controller 804 is configured to illuminate the LEDs 222 in dependence of a device error status, a device operation status, a battery charging in progress status, a battery fully charged status, a charging time status, a wear status of device / attached tool.

In a less preferred example the optical indicators 222 are a plurality of incandescent bulbs, one or more OLEDs, one or more fluorescent lamps, and / or one or more lasers.

Since, the battery housing portion 116 is removable from the first handle 108, the first handle 108 overlaps the one or more optical indicators 222 integrated into the battery housing portion 116. By integrating the LEDs 222 into the battery housing portion 116, the first handle 108 is less complex. This is because less electrical connections are needed between the first handle 108 and the battery housing portion 116. Advantageously, this means that the power tool system with a plurality of different handles 108, 320, 322, 324 e.g. the first handle 108 and the second handle 320 etc is easier to assemble and manufacture.

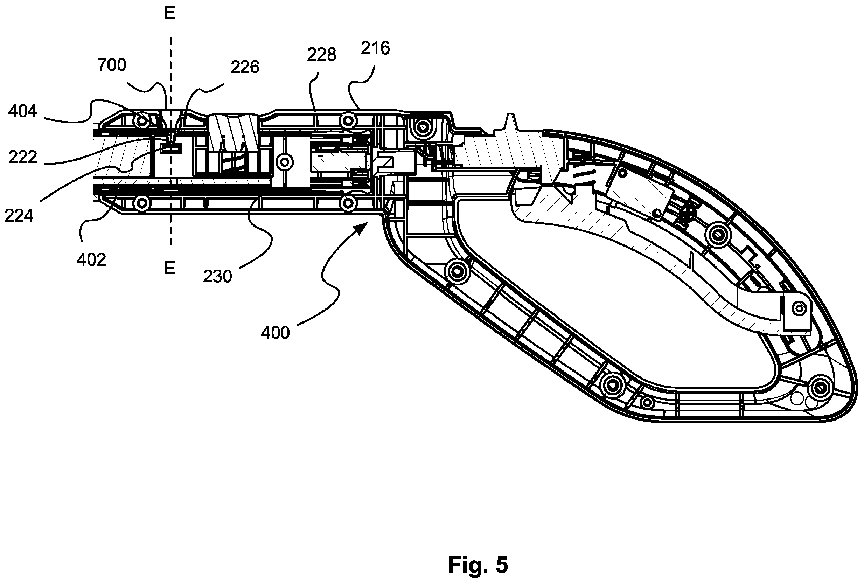

The handle housing sleeve 216 comprises a housing aperture 226 configured to receive light therethrough when the first handle 108 is attached to the elongate housing 102. The LEDs 222 are aligned with the housing aperture 226 when the first handle 108 is mounted on the elongate housing 102. The LEDs 222 and the housing aperture 226 are aligned with an aperture axis E-E as shown in Figure 5. The aperture axis E-E is perpendicular to the longitudinal axis A-A of the elongate housing 102. In some examples, the LEDs 222 are mounted within the interior of the battery housing portion 116. However in some less preferred examples, the LEDs 222 can be flush with a battery housing exterior surface 802 of the battery housing portion 116 or protrude out from the battery housing exterior surface 802.

Optionally, a light guide 700 is mounted within the housing aperture 226. By providing a light guide 700 within the housing aperture 226, the light from the LEDs 222 is more efficiently transmitted through the first handle 108 and the user is better able to view the light from the LEDs 222. The light guide 700 also prevents the housing aperture 226 from being clogged with dirt or debris.

The light guide 700 receives the light from the LEDs 222 and transmits the light from an interior surface 230 of the first handle 108 within the handle housing sleeve 216 to an exterior surface 228 of the first handle 108 on the outside of the handle housing sleeve 216. The light guide 700 is a translucent or transparent component which is configured to transmit light received from the LEDs 222. The light guide 700 is a translucent or transparent plastic material e.g polycarbonate, acrylic plastic, polymethylmethacrylate, or made from another suitable material such as glass. The light guide 700 directs the light through the first handle 108 and prevents loss of light within the first handle 108. In some examples, the light guide 700 optically comprises optical properties for focusing or otherwise modifying the light received from the LEDs 222.

Figures 2, 3 and 4 show a single light guide 700 which is mounted in a single housing aperture 226. However, in other examples there can be a plurality of housing apertures 226 each with separate light guide 700. In some examples, the plurality of housing apertures 226 and light guides 700 can each indicate a different status of the battery pack 120. The first handle 108 as shown in Figures 2, 3, and 4 comprises a single housing aperture 226 for receiving a single light guide 700. This can make manufacture simpler.

The light guide 700 extends in the housing aperture 226 from the interior surface 230 of the first handle 108 within the handle housing sleeve 216 to the exterior surface 228 of the first handle 108 on the outside of the handle housing sleeve 216. In this way, the light guide 700 is flush with both the interior surface 230 of the first handle 108 and the exterior surface 228 of the first handle 108. In this way, the light guide 700 substantially fills the entire volume defined by the housing aperture 226. However, in some other examples the light guide 700 may protrude only partially into the housing aperture 226.

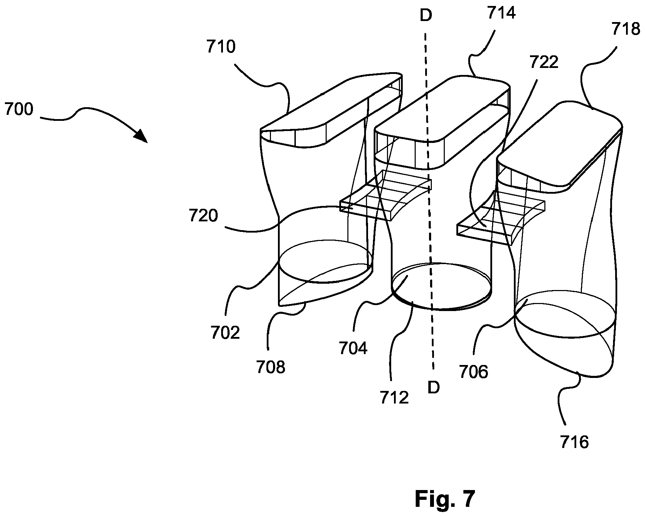

The light guide 700 is shown in more detail in Figure 7. Figure 7 shows a perspective view of the light guide 700. The light guide 700 comprises a plurality of different sub-light guides 702, 704, 706. In some examples, e.g. as shown in Figure 7 there are a first, second and third sub-light guides 702, 704, 706 configured to transmit light from different LEDs 222. For example, the battery housing portion 116 comprises a PCB 224 with three LEDs 222. Each LEDs 222 transmits light into one of the first, second and third sub-light guides 702, 704, 706. Whilst Figure 7 shows the light guide 700 comprising three sub-light guides 702, 704, 706, there can be any number of sub-light guides 702, 704, 706 for transmitting light from the same number of LEDs 222.

The light guide 700 extends along a light guide axis D-D and each of the sub-light guides 702, 704, 706 extend along a direction parallel with the light guide axis D-D. The first and second sub-light guides 702, 704 are connected together via a first transverse bridge portion 720. The third and second sub-light guides 706, 704 are connected together via a second transverse bridge portion 722. The first and second transverse bridge portions 720, 722 fix the first, second and third sub-light guides 702, 704, 706 together as a unitary component.

The first sub-light guide 702 comprises a first interior surface 708 and a first exterior surface 710. The first interior surface 708 is a first light receiving surface and the first exterior surface 710 is a first light emitting surface. The second sub-light guide 704 comprises a second interior surface 712 and a second exterior surface 714. The second interior surface 712 is a second light receiving surface and the second exterior surface 714 is a second light emitting surface. The third sub-light guide 706 comprises a third interior surface 716 and a third exterior surface 718. The third interior surface 716 is a third light receiving surface and the third exterior surface 718 is a third light emitting surface. The first interior surface 708, the second interior surface 712 and the third interior surface 716 are positioned in different planes. This accommodates the curved form of the cylindrical elongate housing 102 and the cylindrical battery housing portion 116. Accordingly, by inclining the first interior surface 708, the second interior surface 712 and the third interior surface 716, the LEDs 222 can be mounted closer than if the first, second and third interior surfaces 708, 712, 716 are in the same plane. This reduces the light losses when transmitting the light from the LEDs 222 to the exterior surface 228 of the first handle 108.

Similarly, the first exterior surface 710, the second exterior surface 714 and the third exterior surface 718 are positioned in different planes. This accommodates the curved form of the exterior surface 228 of the handle housing sleeve 216. Accordingly, by inclining the first exterior surface 710, the second exterior surface 714 and the third exterior surface 718, the light guide 700 can be flush with the exterior surface 228 of the handle housing sleeve 216.

When the light guide 700 is mounted in the housing aperture 226 as shown in Figure 4, the light guide axis D-D is aligned along an aperture axis E-E. This means that the optical path through the light guide is minimized and the light losses due to the light guide 700 are reduced. However, in some examples, the LEDs 222 may not be aligned with the aperture axis E-E when the battery housing portion 116 is mounted to the first handle 108. In this case, the light guide 700 can take a different shape e.g. the light guide comprises a dog-leg shaped light path or a curved light path for guiding the light from the LEDs 222 offset from the aperture axis E-E to the housing aperture 226 on the aperture axis E-E.

In order to further minimize the light losses, the LEDs 222 can optionally comprise a plurality of battery light guides 404. The battery light guides 404 are substantially similar in material and construction to the light guide 700 shown in Figure 7. The battery light guides 404 are mounted adjacent to each LED 222 and extend to the battery housing exterior surface 802 of the battery housing portion 116. The battery light guides 404 are configured to be aligned with the aperture axis E-E when the first handle 108 is connected to the elongate housing 102. Accordingly, the battery light guides 404 each transmit light to the respective sub-light guides 702, 704, 706. In other words the light guide 700 can be formed from two parts, a first light guide part mounted on the first handle 108 and a second light guide part mounted on the battery housing portion 116. When the elongate housing 102 is mounted on the first handle 108, the first light guide part and the second light guide part align along the aperture axis E-E.

In a less preferred example, the light guide 700 can be mounted on the battery housing portion 116 and projects out from the battery housing portion 116. In this case, the light guide 700 is not mounted on the first handle 108. Instead, the light guide 700 slots into the housing aperture 226 when the elongate housing 102 is connected to the first handle 108. The light guide 700 itself can be used to align the elongate housing 102 when connecting to the first handle 108. This may be less desirable because the complexity of the construction of the first handle 108 may be increased.

Figure 4 shows another close-up side cross sectional view of the second end 106 of the elongate housing 102 when engaged with the first handle 108. In order to prevent the first handle 108 from being detached from the elongate housing 102, the elongate housing 102 comprises a second end locking mechanism 300. The second end locking mechanism 300 comprises a second end locking button 302 which is configured to engage a reciprocal housing through hole 304. When the second end locking button 302 is engaged with the reciprocal housing through hole 304, the elongate housing 102 is prevented from moving with respect to the first handle 108 in a direction along the longitudinal axis A-A. In this way, the second end locking mechanism 300 mechanically secures the first handle 108 to the elongate housing 102.

In addition, the second end locking mechanism 300 also allows the battery housing portion 116 to be removably attachable to the elongate tube 118. If the user depresses the second end locking button 302 into the elongate housing 102, the second end locking button 302 passes through an elongate tube through hole 1308 in the elongate tube 118 (best shown in Figure 13). This means that the elongate tube 118 can slide off the battery housing portion 116 and be removed from the elongate tube 118.

The second end locking button 302 is spring biased away from the elongate housing 102 and depressible into the elongate housing 102. In order to insert the second end 106 of the elongate housing 102 into the handle housing sleeve 216, the user depresses the second end locking button 302 into the elongate housing 102 and pushes the second end 106 of the elongate housing 102 into the handle housing sleeve 216. The second end locking button 302 then snaps out into the reciprocal housing through hole 304 when the second end locking button 302 is correctly aligned with the reciprocal housing through hole 304. To remove the first handle 108, the user can push the second end locking button 302 back into the elongate housing 102 to release the elongate housing 102 from the first handle 108.

In some examples, the second tool accessory 140 as shown in Figure 13 connects to the second end 106 of the elongate housing 102 in the same way as shown in Figure 4. Indeed, the second tool accessory 140 comprises an identical locking mechanism to securely attach the first handle 108 to the second tool accessory 140 and the elongate housing 102. Accordingly, the second tool accessory 140 comprises a reciprocal accessory through hole 1300 for engaging with the second end locking button 302. The second tool accessory 140 also comprises a tool locking button 1302 for engaging with the reciprocal housing through hole 304 of the first handle 108.

Figures 12 and 13 show the second tool accessory 140 connected between the first handle 108 and the elongate housing 102. In other examples, additional accessories can also be connected to provide a larger power tool system. For example another tool accessory (not shown) can be electrically and mechanically connected between the elongate housing 102 and the second tool accessory 140 and / or the second tool accessory 140 and the first handle 108. In this example, the additional tool accessory comprises similar locking mechanisms. In one example, the additional tool accessory can be a worksite lamp which illuminates the worksite.

The first end 104 of the elongate housing 102 comprises a first end locking mechanism 124. The first end locking mechanism 124 comprises a first end locking button 126 which is configured to engage a reciprocal accessory through hole 1400. When the first end locking button 126 is engaged with the reciprocal accessory through hole 1400, the elongate housing 102 is prevented from moving with respect to the first tool accessory 130 in a direction along the longitudinal axis A-A.

The elongate housing 102 and the electrical connections thereof will now be described in more detail with respect to Figures 8 to 11. Figure 8 shows a perspective, cross sectional view of the battery housing portion 116, Figure 9 shows a side cross sectional view of the battery housing portion 116, Figure 10 shows a perspective view of the second end 106 of the elongate housing 102 and Figure 11 shows another perspective view of the first end 104 of the elongate housing 102.

Figures 8 and 9 only show the battery housing portion 116 without the elongate tube 118. In the examples, where the battery housing portion 116 only extends part way into the elongate tube 118, the battery housing portion 116 comprises an internal electrical connection 800. The internal electrical connection 800 is in electrical connection with the first electrical interface 904 at the first end 104 of the elongate housing 102. The first electrical interface 904 comprises a first end electrical connector 902. The internal electrical connection 800 can be disconnected from the battery housing portion 116 when the battery housing portion 116 is replaced.

The first electrical interface 904 is shown in Figure 11 and is configured to electrically connect with the first tool accessory 130 as shown in Figures 14 and 15. The first electrical interface 904 electrically couples with a first tool accessory electrical interface 1406.

As mentioned above, the battery housing portion 116 is also electrically connected to the reciprocal handle electrical interface 400 of the first handle 108 via a second electrical interface 906. The second end electrical connector 218 electrically couples with a first handle electrical connector 220.

In addition, the second electrical interface 906 is configured to electrically couple with the reciprocal second tool electrical interface 1304 of the second tool accessory 140 as shown in Figures 12 and 13. In this configuration, the second electrical interface 906 is configured to electrically couple indirectly to the reciprocal handle electrical interface 400 via the reciprocal second tool electrical interface 1304 of the second tool accessory 140. The second tool accessory 140 comprises reciprocal electrical and mechanical connections so that the first trigger switch 112 is electrically connected to the battery housing portion 116 when the second tool accessory 140 is connected between the first handle 108 and the elongate housing 102.

The first electrical interface 904 and the second electrical interface 906 are different. This means that an accessory e.g. the first tool accessory 130 configured to connect to the first end 104 cannot be connected to the second end 106. Similarly, an accessory e.g. the second tool accessory 140 configured to connect to the second end 106 cannot be connected to the first end 104. This means that the user cannot accidentally connect the first or second tool accessories 130, 140 to the incorrect end of the elongate housing 102.

In some examples, the first end electrical connector 902 and the second end electrical connector 218 are located in different positions with respect to the longitudinal axis A-A. The second end electrical connector 218 as shown in Figure 10 is aligned with the longitudinal axis A-A. Conversely, the first end electrical connector 902 as shown in Figure 11 is offset from the longitudinal axis A-A by a distance X. Since the first end electrical connector 902 and the second end electrical connector 218 are located in different offsets from the longitudinal axis A-A, the same electrical connection components can be used for each of the first end electrical connector 902 and the second end electrical connector 218 without the user being able to accidentally connect the wrong tool accessory to the wrong end of the elongate housing 102. This can reduce the cost and complexity of manufacture.

In some examples, the first end 104 and the second end 106 of the elongate housing 102 also comprise different mechanical interfaces.

As mentioned above, the elongate housing 102 comprises a first mechanical interface 908 at the first end 104 of the elongate housing 102. The first mechanical interface 908 is configured to mechanically connect with a reciprocal first tool mechanical interface 1408. The elongate housing 102 also comprises a second mechanical interface 910 at a second end 106 of the elongate housing 102. The second mechanical interface 910 is configured to mechanically connect with a reciprocal handle mechanical interface 402 or a reciprocal second tool mechanical interface 1306.

In order to differentiate between the first mechanical interface 908 and the second mechanical interface 910, the elongate housing 102 comprises a cross sectional shape of the first end electrical connection 902 and a cross-sectional shape of the second end electrical connection 218 which are different. The second mechanical interface 910 comprises a substantially circular cross-sectional shape. The second mechanical interface 910 comprises first and second aligning rails 900, 914 configured to engage in reciprocal longitudinal slots in the handle housing sleeve 216.

The first mechanical interface 908 comprises a combined circular and rectangular cross-sectional shape. The first mechanical interface 908 comprises a projecting body portion 912 configured to engage with a reciprocal recess in the first tool accessory 130.

Since the first and second mechanical interfaces 908, 910 are different, the user is further prevented from accidentally connecting the wrong tool accessory 130, 140 to the wrong end of the elongate housing 102.

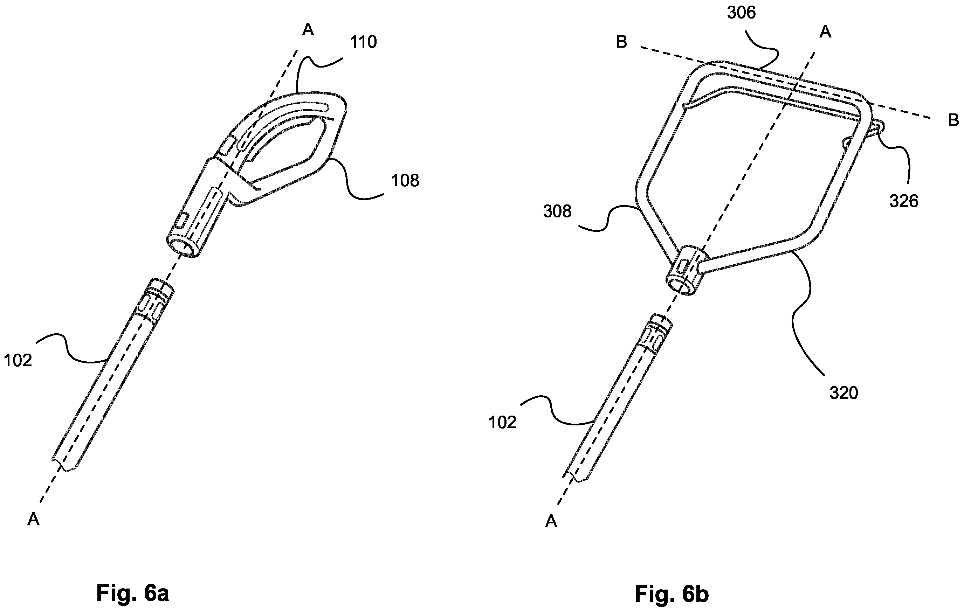

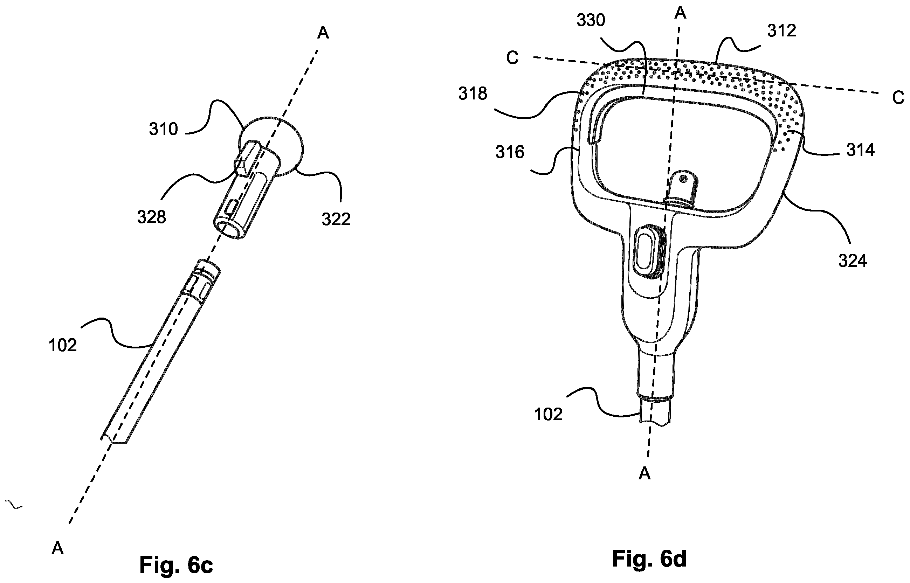

Figures 6a to 6d respectively show perspective views of the first handle 108, a second handle 320, a third handle 322, and a fourth handle 324. Each of the first handle 108, the second handle 320, the third handle 322 and the fourth handle 324 are removably attachable to the elongate housing 102. Each of the first handle 108, the second handle 320, the third handle 322 and the fourth handle 324 comprise a different handle gripping orientation for the user.

The first handle 108 comprises a first handle gripping orientation. The first handle gripping orientation is the configuration of the gripping positions of the user's hands on the power tool 100. As mentioned above, the elongate housing 102 extends along the longitudinal axis A-A. The first handle 108 comprises a pistol grip handle and extends along a longitudinal axis which is parallel with the longitudinal axis A-A of the power tool 100 when connected to the elongate housing 102. This means that the user can place one of their hands gripping the first handle gripping portion 110. Optionally, the user can place another of their hands on the soft gripping material 128 on the elongate housing 102.

The second handle 320 comprises a second handle gripping orientation which is different from the first handle gripping orientation. The second handle 320 comprises a second handle gripping portion 306 which extends along a second handle transverse axis B-B. The second handle gripping portion 306 is an elongate tube which the user can grip with one or two hands. The second handle transverse axis B-B is perpendicular to the longitudinal axis A-A. The second handle gripping portion 306 is sufficiently wide that two hands can be placed side by side when gripping the second handle 320. The second handle 320 comprises yoke portion 308 which connects the second handle gripping portion 306 at both ends. However, in some other examples, the yoke portion 308 of the second handle 320 can be replaced with a second handle extension (not shown) which connects to the second handle gripping portion 306 in a "T" configuration. This can provide a handlebar type gripping configuration for the user where the user grips the second handle gripping portion 306 either side of the intersection between the second handle extension and the second handle gripping portion 306.

The third handle 322 comprises a second handle gripping orientation which is different from the first handle gripping orientation and the second handle gripping orientation. The third handle 322 comprises a ball grip 310 which is configured to support the power tool 100 on the user's body when working at heights. The centre of the ball grip 310 is aligned with the longitudinal axis A-A.

The fourth handle 324 comprises a fourth handle gripping orientation which is different from the first handle gripping orientation, the second handle gripping orientation and the third handle gripping orientation The fourth handle 324 comprises a fourth handle transverse gripping portion 312 which extends along a fourth handle transverse axis C-C. Similar to the second handle 320, the fourth handle 324 is sufficiently wide that two hands can be placed side by side when gripping the fourth handle 324. In addition, the fourth handle 324 comprises fourth handle arm portions 314, 316 which extend in a direction parallel with the longitudinal axis A-A. The fourth handle arm portions 314, 316 are connected to each of the fourth handle transverse gripping portion 312. The fourth handle arm portions 314, 316 can also be gripped by the user during operation. In this way, the user can grip the fourth handle arm portions 314, 316 and / or the fourth handle transverse gripping portion 312. The fourth handle arm portions 314, 316 and the fourth handle transverse gripping portion 312 optionally comprises a textured surface 318 for increasing the friction between the user's hand and the fourth handle 324.

All the handles 108, 320, 322, 324 are electrically connected to the elongate housing 102. The second handle 320, the third handle 322 and the fourth handle 324 respectively comprise a second trigger switch 326, a third trigger switch 328 and a fourth trigger switch 330. The second trigger switch 326, the third trigger switch 328 and the fourth trigger switch 330 are functionally identical to the first trigger switch 112 discussed with reference to the examples. All the previously discussed examples with reference to the first handle 108 are also applicable to the second handle 320, the third handle 322 and the fourth handle 324. In this way, the second trigger switch 326, the third trigger switch 328 and the fourth trigger switch 330 can selectively actuate the first or second tool accessory 130, 140 when electrically connected to the elongate housing 102, similar to the first trigger switch 112.

In some examples, the first or second tool accessory 130, 140 is one or more of: a string trimmer attachment, a hedge trimmer attachment, a power shears attachment, a power washer compressor pump attachment, a flashlight, a blowervac attachment, a chainsaw attachment, a rotavator attachment, a grass shear attachment, a tree lopper attachment, a pole saw attachment, a cultivator attachment, a trencher attachment, an edger attachment, a brush attachment, a joint brush attachment, or a dethatching attachment. In some examples, the power tool 100 comprises a turbine, or a flow measurement device. Each of the aforementioned first or second tool accessory 130, 140 accessories comprises an electrical component e.g. a motor configured to be in electrical connection with the battery pack 120 when attached to the elongate housing 102.

As mentioned above, different handles 108, 320, 322, 324 can be used with different tool accessories 130, 140. This means that the power tool 100 comprises different configurations depending on the task in hand. By changing between the first and second tool accessories 130, 140 the user can achieve different handling properties and ergonomics of the power tool 100. This can be particularly advantageous if a tool accessory e.g. the second tool accessory 140 is heavier than the first tool accessory 130. For example, the second tool accessory 140 is a pump for a power washing attachment and the first tool accessory 130 is a string trimmer attachment. The first tool accessory 130 is lighter than the second tool accessory 140 and therefore the user may need different configurations for the best handling.

Accordingly, the power tool 100 is operable in a first configuration e.g as shown in Figure 15. In the first configuration the centre of gravity 1000 of the power tool 100 is at a first location when the first tool accessory 130 is connected to the first end 104 of the elongate housing 102. The first handle 108 is connected to the second end 106 of the elongate housing 102 when the power tool 100 is in the first configuration. The power tool 100 is also operable in a second configuration as shown in Figure 12 wherein the centre of gravity 1000 of the power tool 100 is at a second location when the second tool accessory 140 is connected to the second end 106 of the elongate housing 102. In the second configuration, the first handle 108 is connected to the second tool accessory 140 as well. The centre of gravity 1000 of the power tool 100 is closer to the first end 104 in the first configuration than in the second configuration. Figures 12 and 15 respectively show the centre of gravity 1000 at a distance Y2 and Y1 from the first handle 108. The distance Y2 shown in Figure 12 is smaller than the distance Y1 shown in Figure 15.

Although not show in Figures 10 or 11, an additional tool accessory can be connected to the second end 106 of the elongate housing 102 when the second tool accessroy 140 is connected to the first end 104 of the elongate housing 102. The additional tool accessory can be a powered tool accessory similar to the first or second tool accessories 130, 140. Alternatively, the additional tool accessory can be a manual tool accessory e.g. a water nozzle attachment, or a brush or other suitable tool accessory. In some examples, the power tool 100 can comprise a tank, a pressurized container or a non-pressurized container. For example, the non-pressurized container can be a dirt container for capturing dirt or debris entrained in a negative pressure air flow of a vacuum cleaner attachment.

In another example, two or more examples are combined. Features of one example can be combined with features of other examples.

Examples of the present disclosure have been discussed with particular reference to the examples illustrated. However, it will be appreciated that variations and modifications may be made to the examples described within the scope of the disclosure.

## Claims

1. A power tool comprising:
an elongate housing comprising a battery, the elongate housing having a first end and a second end, wherein:
the first end has a first electrical interface for removably receiving a first tool accessory comprising a first electrical component capable of being powered by the battery; and the second end has a second electrical interface for removably receiving a second tool accessory comprising a second electrical component capable of being powered by the battery.

2. The power tool according to claim 1 wherein the first electrical interface and the second electrical interface are different.

3. The power tool according to claims 1 or 2 wherein the first end is arranged to removably attach directly to a handle or indirectly to the handle via the first tool accessory.

4. The power tool according to any of the preceding claims wherein the battery comprises one or more battery cells aligned along the longitudinal axis of the elongate housing.

5. The power tool according to any of the preceding claims wherein the second electrical interface is aligned with the longitudinal axis of the elongate housing.

6. The power tool according to any of the preceding claims wherein the first electrical interface is offset from the longitudinal axis of the elongate housing.

7. The power tool according to any of the preceding claims wherein the first end comprises a first mechanical interface and the second end comprises a second mechanical interface.

8. The power tool according to claim 7 wherein the first mechanical interface is different from the second mechanical interface.

9. The power tool according to any of claims 7 or 8 wherein the first mechanical interface and the second mechanical interface respectively comprise a release mechanism for selectively releasing the first tool accessory and the second tool accessory.

10. The power tool according to claim 9 wherein the release mechanism of the first and second mechanical interface each comprises a depressible button for respectively engaging a recess in the first tool accessory and the second tool accessory.

11. The power tool according to any of claims 7 to 10 wherein the second mechanical interface comprises one or more longitudinal rails for engaging with reciprocal slots in the first tool accessory.

12. The power tool according to any of claims 7 to 11 wherein the first mechanical interface comprises a projecting body portion from the elongate housing for engaging with a reciprocal recess in the second tool accessory.

13. The power tool according to any of the preceding claims wherein the first tool accessory and the second tool accessory are not attachable at the same time.

14. A power tool system comprising:
a power tool according to any of claims 1 to 13; and
a first tool accessory; and
a second tool accessory;
wherein the first tool accessory is heavier than the second tool accessory.

15. The power tool system according to claim 14 wherein the power tool system comprises a first configuration wherein the centre of gravity of the power tool is at a first location when the first tool accessory is connected to the first end of the elongate housing and a second configuration wherein the centre of gravity of the power tool is at a second location when the second tool accessory is connected to the second end of the elongate body and the centre of gravity is closer to the first end in the first configuration than in the second configuration.
